# EUROPÄISCHE PATENTSCHRIFT

(11) **EP 0 786 677 B1**
(45) Veröffentlichungstag und Bekanntmachung des Hinweises auf die Patenterteilung: **27.06.2001**
(21) Anmeldenummer: 97100268.8
(22) Anmeldetag: 09.01.1997
(51) Int. Cl.: G02B 6/12, G02B 6/34

(54) **Verfahren zum Betrieb eines Phased Array**
Method for operating a phased array
Méthode d'opération d'un réseau de phase

(30) Priorität: 25.01.1996 DE 19602678
(43) Veröffentlichungstag der Anmeldung: 30.07.1997
(73) Patentinhaber: Infineon Technologies AG, 81669 München (DE)
(72) Erfinder: März, Reinhard, Dr., 81667 München (DE); Heise, Gerhard, Dr., 81739 München (DE)
(74) Vertreter: Zedlitz, Peter, Dipl.-Inf.

(56) Entgegenhaltungen:
- EP-A- 0 651 267
- WO-A-89/06813
- US-A- 5 212 758
- ELECTRONICS LETTERS, Bd. 30, Nr. 12, 9.Juni 1994, Seite 953/954 XP000459777 KIM I: "COMPACT, BROADBAND, POLARISATION-INSENSITIVE 3 DB OPTICAL POWER SPLITTER ON INP"
- ELECTRONICS LETTERS, Bd. 28, Nr. 13, 18.Juni 1992, Seiten 1212-1213, XP000301390 ZIRNGIBL M ET AL: "EFFICIENT 1 X 16 OPTICAL POWER SPLITTER BASED ON INP"
- IEEE PHOTONICS TECHNOLOGY LETTERS, Bd. 6, Nr. 4, 1.April 1994, Seiten 528-530, XP000446615 HATAMI-HANZA H ET AL: "A NEW LOW-LOSS WIDE-ANGLE Y-BRANCH CONFIGURATION FOR OPTICAL DIELECTRIC SLAB WAVEGUIDES"
- H.BISSESSUR ET AL.: "Tunable phased-array demultiplexer on InP", ELECTRONICS LETTERS, , 05. Januar 1995, Band 31, Nr. 1, Seiten 32 - 33

## Beschreibung

Die Erfindung betrifft ein Verfahren zum Betrieb eines Phased Array mit einer optischen Koppelanordnung. Ein Beispiel einer Koppelanordnung ist ein optischer Richtkoppler, bei dem die Wellenleiterendabschnitte über die ganze Länge einer an deren Enden beginnenden Koppelstrecke einen so geringen Abstand voneinander aufweisen, daß längs dieser Koppelstrecke ein Übersprechen, d.h. eine Überkopplung von über die Enden eingekoppelter optischer Strahlung zwischen den Wellenleiterendabschnitten auftritt. Bei einem Richtkoppler ist ein derartiges Übersprechen zur Funktionsfähigkeit notwendig. Eine Koppelanordnung zur polarisationsunabhängigen Aufteilung der Strahlungsleistung ist in der Veröffentlichung von I. Kim et al.: "Compact, broadband, polarisation-insensitive 3 dB optical power splitter on InP" in Electronics Letters 30, 953-954 (1994) beschrieben.

In der US 5,212,758 und in der Veröffentlichung von H. Bissessur et al.: "Tunable phased-array wavelength demultiplexer on InP" in Electronics Letters 31, 32 - 33 (1995) sind sogenannte Phased Arrays beschrieben, die als optische Wellenlängen-Demultiplexer eingesetzt werden können. Bei diesen Phased Arrays ist eine Mehrzahl von nebeneinander geführten streifenartigen Wellenleitern von definiert unterschiedlichen Längen an Eingangs- und Ausgangswellenleiter gekoppelt.

Aufgabe der Erfindung ist es, eine Möglichkeit für eine einfach realisierbare Stabilisierung der Wellenlängen eines optischen Phased Arrays anzugeben.

Diese Aufgabe wird mit dem Verfahren mit den Merkmalen des Anspruches 1 gelöst. Ausgestaltungen ergeben sich aus den abhängigen Ansprüchen.

Durch die verwendete Anordnung kann das Übersprechen zwischen den beiden für die Referenzwellenlänge verwendeten Ausgangswellenleitern weitestgehend unterdrückt werden.

Die Wellenleiterendabschnitte weisen beispielsweise jeweils eine optische Längsachse auf, die an den Enden der Wellenleiterendabschnitte relativ zueinander schräg in einem Winkel angeordnet sind. Dieser Winkel ist beispielsweise kleiner als ein Aperturwinkel am Ende eines Wellenleiterendabschnitts. Der Winkel beträgt vorzugsweise weniger als 2°. Vorteilhafterweise führt bereits ein Winkel von 1° zu einer wirksamen Unterdrückung des Nebensprechens.

Die Enden der Wellenleiterendabschnitte sind vorzugsweise an eine Stirnfläche eines Schichtwellenleiters angekoppelt. Diese Ausführungsform ist nicht nur bei zwei an die Stirnfläche des Schichtwellenleiters angekoppelten Wellenleiterendabschnitten anwendbar, sondern kann beim Vorhandensein von mehr als zwei an die Stirnfläche angekoppelten Wellenleiterendabschnitten bei jedem Paar benachbarter Enden angewendet werden, bei dem aufgrund eines geringen Abstandes zwischen den Enden dieses Paares Übersprechen auftritt.

Bei einer bevorzugten Ausführungsform dieser Anordnung weist die Stirnfläche des Schichtwellenleiters zumindest zwei schräg in dem Winkel zueinander stehende Stirnflächenabschnitte auf, an denen die beiden Wellenleiterendabschnitte derart angekoppelt sind, daß das Ende eines Wellenleiterendabschnitts an einem Stirnflächenabschnitt angekoppelt ist und dieser Wellenleiterendabschnitts eine zu diesem einen Abschnitt im wesentlichen senkrecht stehende Längsachse aufweist und das Ende des anderen Wellenleiterendabschnitts am anderen Stirnflächenabschnitt angekoppelt ist und eine zu diesem anderen Abschnitt im wesentlichen senkrecht stehende Längsachse aufweist.

Streifenartiger Wellenleiter bedeutet einen Wellenleiter mit einer Längsachse, bei dem sich die geführte Strahlung im wesentlichen nur längs dieser Achse und nicht senkrecht dazu ausbreitet. Beispiele solcher Wellenleiter sind integrierte Wellenleiter wie Rippenwellenleiter, eindiffundierte oder implantierte Wellenleiter, aber auch und optische Fasern, beispielsweise Glasfasern.

Bei einer vorteilhaften Ausgestaltung der Anordnung sind die Enden der Wellenleiterendabschnitte an einen einer bestimmten Wellenlänge zugeordneten einzelnen Wellenlängenkanal eines optischen Phased Arrays angekoppelt. Mit Hilfe dieser Anordnung können beispielsweise die Kanallagen des Phased Arrays stabilisiert werden, wie es in der deutschen Patentanmeldung mit dem Titel "Verfahren und Schaltungsanordnung zur Frequenzstabilisierung eines WDM-Multiplexers/-Demultiplexers" und dem amtlichen Aktenzeichen DE 196 02 677 C1, entsprechend der EP 0 786 879 A2, beschrieben ist.

Ein vorteilhaftes Verfahren zum Betrieb eines Phased Array besteht darin, daß die einzukoppelnde Strahlung den Enden der Wellenleiterendabschnitte in Form eines einen bestimmten Durchmesser aufweisenden Strahls zugeführt wird, der auf eine bestimmte örtliche Lage bezüglich der Enden eingestellt wird. Dabei ist es vorteilhaft, wenn der Strahl durch Verschieben in Richtung des geringen Abstandes auf die bestimmte Lage eingestellt wird.

Der bestimmte Durchmesser kann größer oder kleiner als ein Durchmesser des Endes eines Wellenleiterendabschnitts sein. Vorzugsweise ist der bestimmte Durchmesser des Strahls im wesentlichen gleich dem Durchmesser des in einem Wellenleiterendabschnitt geführten Grundmodes.

Beispielsweise wird die einzukoppelnde Strahlung mit einem Fokus des bestimmten Durchmessers auf die Enden der Wellenleiterendabschnitte fokussiert, der auf die bestimmte Lage bezüglich der Enden eingestellt wird.

Es gibt Fälle, bei denen die örtliche Lage des Strahls bzw. Fokus bezüglich der Enden der Wellenleiterendabschnitte von einer Wellenlänge der einzukoppelnden Strahlung abhängt, wie zum Beispiel bei einem optischen Phased Array. In einem solchen Fall kann der Strahl bzw. Fokus auf die bestimmte Lage bezüglich der Enden durch Einstellen der Wellenlänge der Strahlung auf einen der bestimmten Lage entsprechenden Wert eingestellt werden.

Ein besonderer Vorteil der Anordnung liegt in deren Anwendung zum Einstellen eines definierten Leistungsverhältnisses zwischen einem in einen Wellenleiterendabschnitt eingekoppelten Anteil und einem in den anderen Wellenleiterendabschnitt eingekoppelten Anteil der auf die Enden der beiden Wellenleiterendabschnitte fokussierten Strahlung. Diese Anwendung ist durch eine auf der Unterdrückung des Übersprechens basierenden günstige Charakteristik der Anordnung ermöglicht.

Die Erfindung wird in der nachfolgenden Beschreibung anhand der Figuren beispielhaft näher erläutert. Es zeigen:
- Figur 1: in schematischer Darstellung eine Draufsicht auf eine verwendete Anordnung,
- Figur 2: eine günstige Charakteristik der Anordnung nach Figur 1,
- Figur 3: in schematischer Darstellung ein Beispiel eines optische Phased Arrays, an das eine Anordnung gemäß Figur 1 angekoppelt ist, und
- Figur 4: den in der Figur 3 mit der gestrichelten Linie A umrandeten und die verwendete Anordnung enthaltenden Bereich in vergrößerter Darstellung.

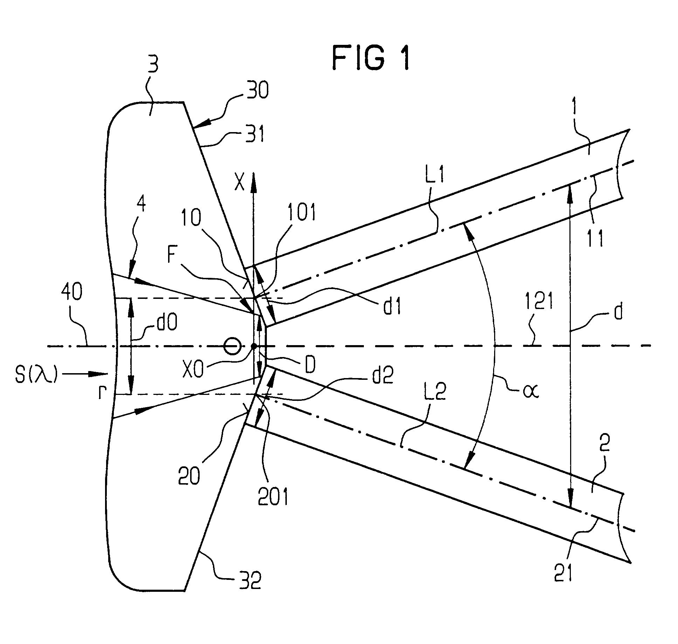

Nach Figur 1 besteht die beispielhafte optische Koppelanordnung aus einem Paar nebeneinander verlaufender streifenartiger optischer Wellenleiterendabschnitte 1 und 2 mit den nebeneinander angeordneten Enden 10 bzw. 20 zum Einkoppeln von beispielsweise aus einer gemeinsamen Richtung r zugeführter optischer Strahlung S in die Wellenleiterendabschnitte 1 und 2.

Die Enden 10 und 20 sind in einem beispielsweise zwischen Zentren 101 bzw. 201 der Enden 10 und 20 gemessenen Abstand d0 voneinander angeordnet, der so gering bemessen ist, daß in den mit diesem geringen Abstand d0 nebeneinander verlaufenden optischen Wellenleiterendabschnitten 1 und 2 Über- bzw. Nebensprechen auftreten würde. Der geringe Abstand d0 ist beim Beispiel nach Figur 1 so gewählt, daß zwischen den Enden 10 und 20 eine Lücke besteht, er könnte auch so gewählt sein, so daß sich die Enden 10 und 20 lückenlos berühren.

Die Wellenleiterendabschnitte 1 und 2 sind in einem vom geringen Abstand d0 an den Enden 10 und 20 aus zunehmenden Abstand d voneinander angeordnet. Bei der angenommenen Richtung r der einzukoppelten Strahlung S bedeutet dies beispielsweise, daß der Abstand d von den Enden 10 und 20 aus in dieser Richtung r zunimmt.

Die Wellenleiterendabschnitte 1 und 2 weisen z. B. jeweils eine optische Längsachse 11 bzw. 21 auf, die an den Enden 10 bzw. 20 der Wellenleiterendabschnitte 1 und 2 relativ zueinander schräg in Winkel α angeordnet sind, der sich in der angenommenen Richtung r aufweitet.

Bei dem Beispiel nach Figur 1 ist es z.B. so eingerichtet, daß der Winkel α eine in der Richtung r ausgerichtete Winkelhalbierende 121 aufweist und der zunehmende Abstand d der senkrecht zur Winkelhalbierenden 40 gemessenene Abstand zwischen den beiden Längsachsen 11 und 12 der Wellenleiterendabschnitte 1 und 2 ist. Überdies ist es so eingerichtet, daß die Längsachse 11 des Wellenleiterendabschnitts 1 durch das Zentrum 101 des Endes 10 dieses Endabschnitts 1 und die optische Längsachse 21 des anderen Wellenleiterendabschnitts 2 durch das Zentrum 201 des Endes 20 dieses anderen Endabschnitts 2 geht.

Der Winkel α ist beispielsweise kleiner als ein Aperturwinkel am Ende 10 bzw. 20 eines Wellenleiterendabschnitts 1 und/oder 2 gewählt und kann weniger als 2° betragen. Bei einer konkreten Realisierung des Ausführungsbeispiels betrug der Winkel α etwa 1,6°.

Die Enden 10 und 20 der Wellenleiterendabschnitte 1 und 2 sind beispielsweise an eine Stirnfläche 30 eines Schichtwellenleiters 3 angekoppelt, in welchem die einzukoppelnde Strahlung S den Enden 10 und 20 zugeführt wird.

Die Stirnfläche 30 weist beispielsweise zwei schräg im Winkel α zueinander stehende Stirnflächenabschnitte 31 und 32 auf, an denen die beiden Wellenleiterendabschnitte 1 und 2 angekoppelt sind. Beispielsweise ist das Ende 10 des Wellenleiterendabschnitts 1 am Stirnflächenabschnitt 31 angekoppelt und das Ende 20 des anderen Wellenleiterendabschnitts 2 am anderen Stirnflächenabschnitt 32 angekoppelt. Es könnte auch umgekehrt sein.

Jeder Wellenleiterendabschnitt weist vorzugsweise eine zum Stirnflächenabschnitt, an den er angekoppelt ist, im wesentlichen senkrecht stehende Längsachse auf. Bezogen auf das Beispiel nach Figur 1 bedeutet dies, daß der an den Abschnitt 31 angekoppelte Wellenleiterendabschnitt 1 die zu diesem Abschnitt 31 im wesentlichen senkrecht stehende Längsachse 11 und der Wellenleiterendabschnitt 2 die zum Abschnitt 32 im wesentlichen senkrecht stehende Längsachse 21 aufweist.

Die Wellenleiterendabschnitte 1 und 2 mit dem zunehmenden Abstand d voneinander können nach Erreichen eines für eine Unterdrückung des Übersprechens ausreichnd großen Werts dieses Abstandes d in nicht dargestellete, beispielsweise parallele streifenartige Wellenleiter mit einem Abstand voneinander übergehen, der zumindest gleich dem großen Wert ist. Der Übergang kann beispielsweise durch einen krummlinigen Verlauf der Wellenleiterendabschnitte 1 und 2 hergestellt sein. Dabei ist es zweckmäßig, obgleich nicht notwendig, wenn die Wellenleiterendabschnitte 1 und 2 ausgehend von den Enden 10 und 20 zunächst eine bestimmte Strecke lang geradlinig verlaufen, d.h. eine geradlinig verlaufende Längsachse 11 bzw. 21 aufweisen, und allenfalls dann in einen Verlauf mit gekrümmter Längsachse 11 bzw. 21 übergehen.

Die Anordnung kann beispielsweise so betrieben werden, daß die einzukoppelnde Strahlung S den Enden 10 und 20 der Wellenleiterendabschnitte 1 bzw. 2 in Form eines einen bestimmten Durchmesser D aufweisenden Strahls 4 zugeführt wird, der auf eine bestimmte Lage x0 bezüglich der Enden 10, 20 eingestellt wird. Die Lage des Strahls 4 ist beispielsweise durch die Lage einer Achse 40 dieses Strahls 4 in bezug auf die Enden 10 und 20 bestimmt.

Der Strahl 4 ist vorzugsweise ein kollimierter oder fokussierter Strahl. Beispielsweise wird die einzukoppelnde Strahlung S mit einem Fokus F auf die Enden 10 und 20 der Wellenleiterendabschnitte 1 und 2 fokussiert, der auf die bestimmte Lage x0 bezüglich der Enden 10 und 20 eingestellt wird.

Der Strahl 4 bzw. Fokus F wird vorzugsweise durch Verschieben in Richtung des geringen Abstandes d0, die in der Figur 1 die Richtung der x-Achse ist, auf die bestimmte Lage x0 eingestellt. In der Figur 1 ist die bestimmte Lage x0 beispielsweise so gewählt, daß sie in der Mitte zwischen den Zentren 101 und 201 der Enden 10 und 20 liegt. Diese Mittellage ist in vielen Fällen die bevorzugte. Die bestimmte Lage x0 kann aber von Fall zu Fall von der Mittellage abweichen.

In der Figur 1 ist der Strahl 4 bzw. Fokus F so dargestellt, daß die Achse 40 des Strahls 4, die zugleich eine Achse des Fokus F ist, beispielsweise wie die Winkelhalbierende 121 in der angenommenen Richtung r ausgerichtet ist.

Es sei darauf hingewiesen, daß die Koppelanordnung nicht auf eine bestimmte Richtung r der einzukoppelnden Strahlung S beschränkt ist. Bei gewissen Anwendungsmöglichkeiten der Koppelanordnung, beispielsweise bei Spektrographen, ist jedoch eine bestimmte Richtung r der Strahlung S vorgegeben. Diese kann beispielsweise in einer Soll- oder Haupt-Ausbreitungsrichtung r der Strahlung S bestehen, von der gewisse Abweichungen erlaubt sind. Die Achse 40 kann in einem solchen Fall um einen gewissen, nicht dargestellten Winkel, beispielsweise einen innerhalb eines vorgebbaren oder vorgegebenen Zulässigkeitsbereichs liegenden Winkel, von der Richtung r abweichen. Eine Abweichung von der Richtung r kann von der örtlichen Lage des Strahls 4 bzw. Fokus F bezüglich der Enden 10 und 20, beispielsweise der Lage x seiner Achse 40 auf der x-Achse, abhängen.

In den Fällen, bei denen die Lage des Strahls 4 bzw. Fokus F bezüglich der Enden 10 und 20, beispielsweise die Lage x, von einer Wellenlänge λ der einzukoppelnden Strahlung S abhängt, beispielsweise x = f(λ) gilt, wobei f eine bestimmte oder gewisse Funktion ist, kann der Strahl 4 bzw. Fokus F auf die bestimmte Lage x0 durch Einstellen der Wellenlänge λ der Strahlung S auf einen der bestimmten Lage x0 entsprechenden Wert eingestellt werden.

Solche Verhältnisse liegen beispielsweise bei einem Spektrographen vor. Die Koppelanordnung und insbesondere das erfindungsgemäße Verfahren sind bei derartigen Spektrographen beispielsweise auf deren Ausgangsseite zu verschiedenen Zwecken einsetzbar.

Ein erfindungsgemäßes Verfahren kann vorteihafterweise zum Einstellen eines definierten Leistungsverhältnisses zwischen einem in einen Wellenleiterendabschnitt eingekoppelten Leistunganteil und einem in den anderen Wellenleiterendabschnitt eingekoppelten Leistungsanteil der den Enden 10 und 20 der beiden Wellenleiterendabschnitte 1 und 2 zugeführten Strahlung S verwendet werden. Beispielsweise kann das Leistungsverhältnis L1/L2 oder L2/L1 zwischen einem in den Wellenleiterendabschnitt 1 eingekoppelten Leistungsanteil L1 und einem in den anderen Wellenleiterendabschnitt 2 eingekoppelten Leistungsanteil L1 eingestellt werden.

Diese Anwendung basiert auf der auf der Unterdrückung des Übersprechens beruhenden vorteilhaften Eigenschaft der Koppelanordnung, nach der das Leistungsverhältnis im Bereich des geringen Abstandes d0 zwischen Enden 10 und 20 eine eindeutige monotone Funktion der Lage x des Strahls 4 bzw. Fokus F bezüglich der Enden 10 und 20 ist. Dabei besteht der besondere Vorteil, daß das Leistungsvehältnis nicht nur im Bereich des geringen Abstandes d0, sondern in einem diesen Bereich enthaltenden größeren Bereich eine monotone Funktion der Lage x des des Strahls 4 bzw. Fokus F ist. Die Anordnung ist aufgrund dieser Tatsache hervorragend für Regelungszwecke über das Leistungsverhältnis als Soll- und Istgröße geeignet, wobei überdies ein großer Fangbereich zur Verfügung steht.

In dem Fall, daß die Lage x im Bereich des Abstandes oder dem größeren Bereich eine eindeutige monotone Funktion f der bestimmten Wellenlänge λ der einzukoppelnden Strahlung S ist, was in vielen Fällen zutrifft, ist das Leistungsverhältnis in diesem Bereich auch eine eine eindeutige monotone Funktion dieser Wellenlänge λ.

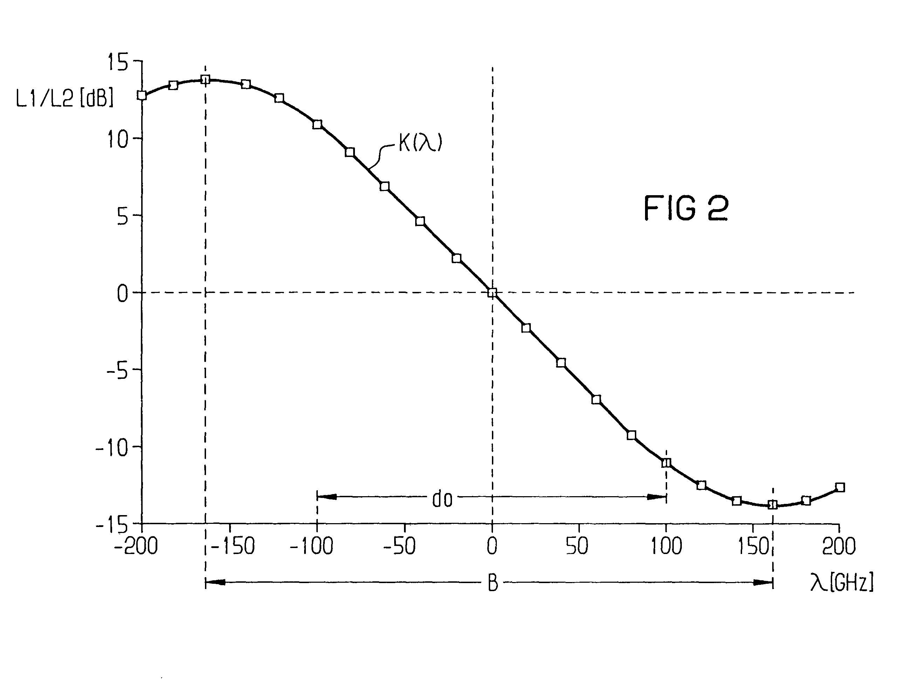

Ein Beispiel für einen derartigen Fall ist in der Figur 2 gezeigt, bei welcher beispielsweise das Leistungsverhältnis L1/L2 in Abhängigkeit von der Wellenlänge λ der Strahlung S aufgetragen ist.

Bei diesem Beispiel wurde die Strahlung S mit einem Durchmesser D auf diese Enden 10 und 20 fokussiert, der im wesentlichen gleich dem Durchmesser des in den beispielsweise zueinander gleich bemessenen Wellenleiterendabschnitten 1 und 2 jeweils geführten Grundmodes war. Der Durchmesser des in jedem Wellenleiterendabschnitt 1 und 2 geführten Grundmodes ist mit dem Durchmesser dl bzw. d2 dieses Abschnitts 1 bzw. 2 vergleichbar.

Die Lage x des Strahls 4 bzw. Fokus F hing in dem größeren Bereich im wesentlichen linear von der Wellenlänge λ ab.

Der zwischen den Zentren 101 und 201 der Enden 10 und 20 gemessene geringe Abstand d0 betrug beipielsweise 10µm und war größer als die Summe der Durchmesser der beiden geführten Grundmoden gewählt. Die 10µm entsprachen 200GHz.

Der Nullpunkt 0 der x-Achse in Figur 1 lag genau in der Mitte zwischen den beiden Zentren 101 und 201 der Enden 10 und 20. Diesem Nullpunkt 0 entspricht der Nullpunkt 0 der λ-Achse in Figur 2. Deutlich ist zu entnehmen, daß der Fangbereich B, d.h. der Bereich, in dem das Leistungsverhältnis L1/L2 eine monotone Funktion K(λ) der Wellenlänge λ ist, etwas größer als der Bereich von -150GHz bis +150GHz ist, der einem Bereich der Lage x von -7,5µm bis +7,5µm entspricht.

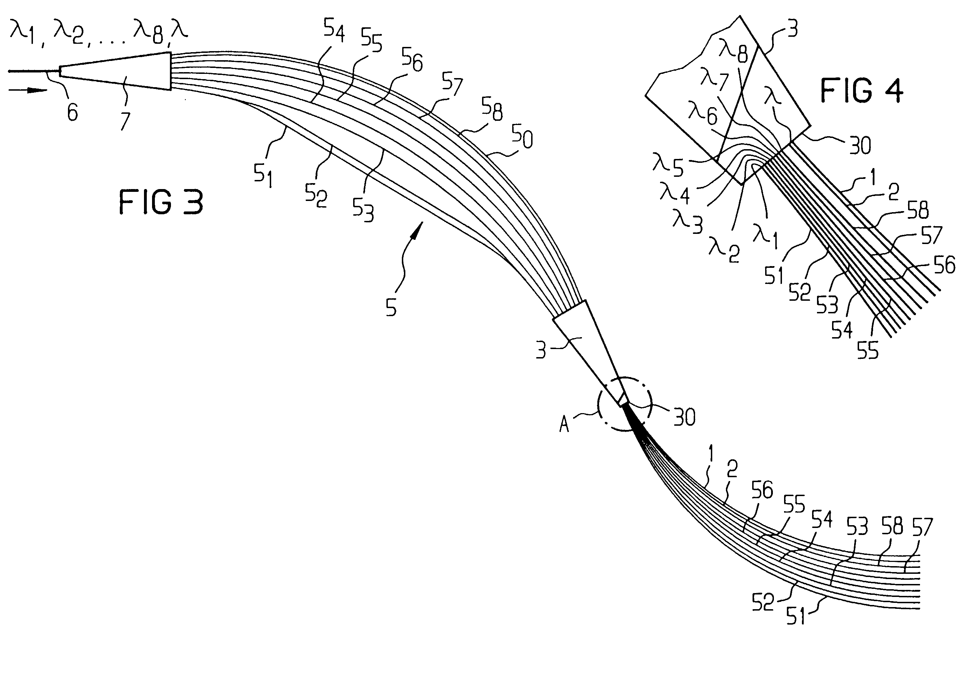

Die Figuren 3 und 4 beziehen sich auf eine bevorzugte Anwendung der Anordnung, bei der die Enden 10 und 20 der Wellenleiterendabschnitte 1 und 2 an einen einer bestimmten Wellenlänge λ zugeordneten einzelnen Wellenlängenkanal eines optischen Phased Arrays 5 angekoppelt sind.

Bei dem in Figur 3 in seiner Gesamtheit dargestellten Phased Array 5 ist beispielsweise ein streifenartiger optischer Wellenleiter 6 zum gemeinsamen Zuführen mehrerer, beispielsweise acht voneinander verschiedener optischer Wellenlängen λ₁ bis λ₈ und der von diesen Wellenlängen verschiedenen bestimmten Wellenlänge λ zum Phased Array 5 an einen eingangseitigen optischen Schichtwellenleiter 7 des Phased Arrays 5 angekoppelt, der die aus dem streifenartigen Wellenleiter 6 eingekoppelte optische Strahlung leistungsmäßig auf verschiedene an den Schichtwellenleiter 7 angekoppelte streifenartige optische Wellenleiter 5₁ bis 5₈ und 5₀ voneinander verschiedener optischer Länge des Phased Arrays 5 derart verteilt, daß jeder dieser Wellenleiter 5₁ bis 5₈ und 5₀ jeweils sämtliche Wellenlängen λ₁ bis λ₈ und λ empfängt.

Die streifenartigen Wellenleiter 5₁ bis 5₈ und 5₀ sind andererseits an einen ausgangseitigen optischen Schichtwellenleiter 3 des Phased Arrays 5 angekoppelt, in welchem die in den streifenartigen Wellenleitern 5₁ bis 5₈ und 5₀ zugeführten und in diesen Schichtwellenleiter 3 eingekoppelten Wellenlängen λ₁ bis λ₈ und λ einander überlagert werden, derart, daß jede einzelne dieser Wellenlängen λ₁ bis λ₈ und λ auf je eine andere Stelle einer ausgangsseitigen Stirnfläche 30 des Schichtwellenleiters 3 konzentriert wird. Jede dieser Stellen entspricht je einem einzelnen Wellenlängenkanal dem nur die auf diese Stelle konzentrierte Wellenlänge zugeordnet ist und es liegen somit räumlich voneinander getrennte einzelne Wellenlängenkanäle vor, deren jedem je eine der Wellenlängen λ₁ bis λ₈ und λ zugeordnet ist.

Mit Ausnahme des der bestimmten Wellenlänge λ zugeordneten Wellenlängenkanals ist bei jedem der den mehreren Wellenlängen λ₁, λ₂,... λ₈ zugeordneten Wellenlängenkanäle je ein streifenartiger optischer Wellenleiter 51, 52,... bzw. 58 an die Stirnfläche 30 des Schichtwellenleiters 3 angekoppelt, der nur die diesem Wellenlängenkanal zugeordnete Wellenlänge λ₁, λ₂,...bzw. λ₈ fortleitet.

Bei dem der bestimmten Wellenlänge λ zugeordneten Wellenlängenkanal ist dagegen eine Anordnung mit den wellenleiterendabschnitten 1 und 2 an die Stirnfläche 30 des Schichtwellenleiters 3 angekoppelt (siehe insbesondere Figur 4), beispielsweise in Form der beispielhaften Anordnung nach den Figuren 1 und 2.

Beim dargestellten Beispiel ist die bestimmte Wellenlänge λ so beispielsweise so gewählt, daß sie die kürzeste Wellenlänge ist.

Mit Hilfe dieser Anordnung kann die Lage der Wellenlängenkanäle auf der Stirnfläche 30 des Schichtwellenleiters 3 unter Verwendung der bestimmten Wellenlänge λ als eine Referenzwellenlänge stabilisiert werden, beispielsweise so, wie es in der oben näher bezeichneten deutschen Patentanmeldung beschrieben ist.

## Patentansprüche

1. Verfahren zum Betrieb eines Phased Array, das aufweist einen eingangsseitigen optischen Schichtwellenleiter (7), an den ein eingangsseitiger streifenartiger optischer Wellenleiter (6) zum gemeinsamen Zuführen mehrerer voneinander verschiedener optischer Wellenlängen (λ₁, λ₂, λ₃, λ₄, λ₅, λ₆, λ₇, λ₈) und einer von diesen Wellenlängen verschiedenen bestimmten Wellenlänge (λ) geführt ist,
verschiedene an die Ausgangsseite des eingangsseitigen optischen Schichtwellenleiters (7) angekoppelte streifenartige optische Wellenleiter (5₁, 5₂, 5₃, 5₄, 5₅, 5₆, 5₇, 5₈, 5₀) voneinander verschiedener optischer Längen,
einen daran angekoppelten ausgangsseitigen optischen Schichtwellenleiter (3) und
ausgangsseitige streifenartige optische Wellenleiter (51, 52, 53, 54, 55, 56, 57, 58, 1, 2), die an eine ausgangsseitige Stirnfläche (30) des ausgangsseitigen optischen Schichtwellenleiters (3) angekoppelt sind,
wobei zwei bestimmte ausgangsseitige optische Wellenleiter (1, 2) mit ihren an die Stirnfläche (30) angekoppelten Enden (10, 20) in einem Abstand (d0) voneinander angeordnet sind, der so gering bemessen ist, dass in mit diesem Abstand nebeneinander verlaufenden optischen Wellenleiterendabschnitten Über- bzw. Nebensprechen auftnitt,
wobei ein jeweiliger Endabschnitt dieser bestimmten Wellenleiter jeweils eine optische Längsachse (11, 21) aufweist und wobei diese Längsachsen einen Winkel, der weniger als 2° betrögt, zueinander bilden,
**dadurch gekennzeichnet,** dass
jede einzelne der in den streifenartigen optischen Wellenleitern (5₁, 5₂, 5₃, 5₄, 5₅, 5₆, 5₇, 5₈, 5₀) zugeführten Wellenlängen (λ₁, *λ*₂, *λ*₃, λ₄, *λ*₅, ***λ***₆, *λ*₇, *λ*₈, λ) entsprechend je einem einzelnen Wellenlängenkanal auf je eine andere Stelle der ausgangsseitigen Stirnfläche (30) des ausgangsseitigen optischen Schichtwellenleiters (3) konzentriert wird,
die den Wellenlängenkanälen zugeordneten Wellenlängen in mindestens einem ausgangsseitigen optischen Wellenleiter (51, 52, 53, 54, 55, 56, 57, 58) fortgeleitet werden und
die bestimmte Wellenlänge (λ) in den zwei bestimmten ausgangsseitigen optischen Wellenleitern fortgeleitet wird.

2. Verfahren nach Anspruch 1, bei dem
die bestimmte Wellenlänge (λ) als Referenzwellenlänge zur Stabilisierung der Lage der Wellenlängenkanäle auf der ausgangsseitigen Stirnfläche (30) des ausgangsseitigen optischen Schichtwellenleiters (3) verwendet wird.

3. Verfahren nach Anspruch 1 oder 2, bei dem
mit Ausnahme der bestimmten Wellenlänge (λ) die den Wellenlängenkanälen zugeordneten Wellenlängen in je einem ausgangsseitigen optischen Wellenleiter (51, 52, 53, 54, 55, 56, 57, 58) fortgeleitet werden.

## Claims

1. Method for operating a phased array which has an input-side optical planar waveguide (7), to which is led an input-side strip-like optical waveguide (6) for jointly feeding a plurality of mutually different optical wavelengths (λ₁, *λ*₂, λ₃, λ₄, *λ* ₅, *λ*₆, *λ*₇, λ₈) and a specific wavelength (λ) which is different from these wavelengths,
various strip-like optical waveguides (5₁, 5₂, 5₃, 5₄, 5₅, 5₆, 5₇, 5₈, 5₀), which are coupled to the output side of the input-side optical planar waveguide (7) and have mutually different optical lengths,
an output-side optical planar waveguide (3) coupled thereto, and
output-side strip-like optical waveguides (51, 52, 53, 54, 55, 56, 57, 58, 1, 2), which are coupled to an output-side end face (30) of the output-side optical planar waveguide (3),
two specific output-side optical waveguides (1, 2) being arranged at a distance (d0) from one another by their ends (10, 20) coupled to the end face (30), which distance is dimensioned to be so small that crosstalk occurs in optical waveguide end sections which run next to one another at this distance,
a respective end section of these specific waveguides each having an optical longitudinal axis (11, 21) and these longitudinal axes forming an angle of less than 2° with respect to one another,
characterized in that
each individual wavelength of the wavelengths (λ₁, λ₂, λ₃ λ₄, λ₅, λ₆, λ₇, λ₈, λ) which are fed in the strip-like optical waveguides (5₁, 5₂, 5₃, 5₄, 5₅, 5₆, 5₇, 5₈, 5₀) is concentrated, in accordance with a respective individual wavelength channel, onto a respective other. location of the output-side end face (30) of the output-side optical planar waveguide (3),
the wavelengths assigned to the wavelength channels are conducted in at least one output-side optical waveguide (51, 52, 53, 54, 55, 56, 57, 58) and
the specific wavelength (λ) is conducted in the two specific output-side optical waveguides.

2. Method according to Claim 1, in which
the specific wavelength (λ) is used as a reference wavelength for stabilizing the position of the wavelength channels on the output-side end face (30) of the output-side optical planar waveguide (3).

3. Method according to Claim 1 or 2, in which,
with the exception of the specific wavelength (λ), the wavelengths assigned to the wavelength channels are conducted in a respective output-side optical waveguide (51, 52, 53, 54, 55, 56, 57, 58).

## Revendications

1. Procédé pour faire fonctionner un réseau à commande de phase qui comporte
un guide d'ondes à couches optique côté entrée (7) auquel est envoyé un guide d'ondes optique en forme de bande côté entrée (6) pour l'amenée commune de plusieurs longueurs d'ondes optiques différentes les unes des autres (λ₁, λ₂, λ₃, λ₄, λ₅, λ₆, λ₇, λ₈) et d'une longueur d'onde déterminée (λ) différente de ces longueurs d'ondes,
différents guides d'ondes optiques en forme de bandes (5₁, 5₂, 5₃, 5₄, 5₅, 5₆, 5₇, 5₈, 5₀) couplés au côté sortie du guide d'ondes à couches optique coté entrée (7) et ayant des longueurs optiques différentes les unes des autres,
un guide d'ondes à couches optique côté sortie (3) couplé aux précédents et
des guides d'ondes optiques en forme de bandes côté sortie (51, 52, 53, 54, 55, 56, 57, 58, 1, 2) qui sont couplés à une surface frontale côté sortie (30) du guide d'ondes à couches optique côté sortie (3),
dans lequel deux guides d'ondes optiques côté sortie déterminés (1, 2) sont agencés l'un par rapport à l'autre avec leurs extrémités (10, 20), couplées à la surface frontale (30), à une distance (d0) qui est dimensionnée si petite qu'il apparaît une diaphonie dans des terminaisons de guides d'ondes optiques s'étendant l'une à côté de l'autre à cette distance,
dans lequel une terminaison respective de ces guides d'ondes déterminés comporte à chaque fois un axe longitudinal optique (11, 21) et
dans lequel ces axes longitudinaux forment ensemble un angle qui est inférieur à 2°,
caractérisé par le fait
que chacune des longueurs d'ondes (λ₁, λ₂, λ₃, λ₄, λ₅, λ₆, λ₇, λ₈, λ) envoyées dans les guides d'ondes optiques en forme de bandes (5₁, 5₂, 5₃, 5₄, 5₅, 5₆, 5₇, 5₈, 5₀) est concentrée, à chaque fois selon un canal à longueur d'onde individuel, sur un endroit différent de la surface frontale côté sortie (30) du guide d'ondes à couches optique côté sortie (3),
que les longueurs d'ondes associées aux canaux à longueur d'onde sont envoyées ensuite dans au moins un guide d'ondes optique côté sortie (51, 52, 53, 54, 55, 56, 57, 58) et
que ladite longueur d'onde déterminée (λ) est envoyée ensuite dans les guides d'ondes optiques côté sortie déterminés.

2. Procédé selon la revendication 1, dans lequel ladite longueur d'onde déterminée (λ) est utilisée comme longueur d'onde de référence pour la stabilisation de la position des canaux à longueur d'onde sur la surface frontale côté sortie (30) du guide d'ondes à couches optique côté sortie (3).

3. Procédé selon la revendication 1 ou 2, dans lequel, à l'exception de ladite longueur d'onde déterminée (λ), les longueurs d'ondes associées aux canaux à longueur d'onde sont envoyées ensuite à chaque fois dans un guide d'ondes optique côté sortie (51, 52, 53, 54, 55, 56, 57, 58).
